Europäisches Patentamt

European Patent Office

Office européen des brevets

(11) Publication number: **0 334 318**
**A2**

## EUROPEAN PATENT APPLICATION

(21) Application number: **89105130.2**

(51) Int. Cl.⁴: **H04N 1/00**

(22) Date of filing: **22.03.89**

(30) Priority: **22.03.88 JP 67801/88**

(43) Date of publication of application:
**27.09.89 Bulletin 89/39**

(84) Designated Contracting States:
**BE DE FR GB IT NL**

(71) Applicant: **Kabushiki Kaisha Toshiba
72, Horikawa-cho Saiwai-ku
Kawasaki-shi(JP)**

(72) Inventor: **Osada, Masakazu c/o Patent
Division
Kabushiki Kaisha Toshiba 1-1 Shibaura
1-chome
Minato-ku, Tokyo 105(JP)**

(74) Representative: **Henkel, Feiler, Hänzel &
Partner
Möhlstrasse 37
D-8000 München 80(DE)**

(54) Network system.

(57) In a network system, a transmission node (1) has a packet processor (5-1) for forming a command packet by adding identification data for identifying additional data and pixel data to control data, and a reception node (2) has a data discriminator (6-2) for discriminating the additional data and the pixel data on the basis of the identification data.

F I G. 1

## Network system

The present invention relates to a network system having a plurality of nodes and capable of performing data communications among the nodes.

In image data communication in a network system, transfer of pixel data constituting image data, and transfer of image additional data associated with the image data (e.g., an ID (identification) number of image data, and data of a date of generation of image data, and the like) are performed. Conventionally, the pixel data and the image additional data (to be referred to as "additional data" hereinafter) are transferred not as one message but separately. More specifically, a transmission protocol is set between a transmission node and a reception node upon every communication. For example, data is transferred in accordance with a protocol set in such a manner that additional data is transmitted first, and then, pixel data is transmitted.

In addition to the above-mentioned system, a system of transferring additional data and pixel data as one message is known. The ACR-NEMA, i.e., the American Collage of Radiology (ACR) and the National Electrical Manufacturers Association (NEMA), standards for medical image communication employ the latter system. In this system, all the transferred messages are fetched in an internal buffer of an interface of a reception node, and then, the contents of the messages are analyzed and discriminated into additional data and pixel data.

However, in this system, since pixel data has a very large data volume, the interface must incorporate a large-scale buffer, and an overhead due to message analysis is large.

It is an object of the present invention to provide a network system for transferring additional data and pixel data as one message, which can reduce the scale of an internal buffer of an interface of a reception node and can eliminate an overhead due to message analysis.

According to a first typical system of the present invention, there is provided a network system which has a plurality of nodes, forms a command packet on the basis of control data associated with transfer of image data, and forms a data packet on the basis of additional data and pixel data to perform data communication between nodes, wherein a transmission node comprises a packet processor for adding identification data for identifying the additional data and the pixel data to the control data so as to form the command packet, and a reception node comprises a data discriminator for discriminating the additional data and the pixel data on the basis of the identification data.

According to a second typical system of the present invention, there is provided a network system which has a plurality of nodes, and can perform data communication between the nodes, wherein a transmission node comprises a packet processor for forming a command packet on the basis of control data associated with image transfer, forming an additional data packet on the basis of additional data, and forming a pixel data packet on the basis of pixel data, and a reception node comprises a packet discriminator for checking types of received packets to discriminate the packets.

The first system operates as follows.

At the transmission node, identification data for identifying additional data and pixel data is added to control data, and a command packet is formed on the basis of the control data. At the reception node, the command packet is received first, and then, a data packet is received. In this case, the additional data and pixel data are discriminated on the packet level on the basis of the identification data. More specifically, after the data packet arrives at the reception node, whether the corresponding packet is the additional or pixel data is immediately checked to discriminate the packet. With this system, since all the additional data and pixel data transferred from the transmission node need not be fetched in an internal buffer of an interface, the scale of the internal buffer of the interface can be reduced, and an increase in overhead due to message analysis can be eliminated.

The second system operates as follows.

Packets are formed and transmitted in units of control data, additional data, and pixel data, respectively, and packet discrimination is performed at the reception side by checking the packet types. Therefore, like in the first system, since all the messages transferred from the transmission node need not be fetched in an internal buffer of an interface, the scale of the internal buffer of the interface can be reduced, and an increase in overhead due to message analysis can be eliminated.

This invention can be more fully understood from the following detailed description when taken in conjunction with the accompanying drawings, in which:

Fig. 1 is a block diagram showing an arrangement of a network system according to a first embodiment of the present invention;

Fig. 2 is a view for explaining a format of a message in the system shown in Fig. 1;

Fig. 3 is a flow chart for explaining an operation of the system shown in Fig. 1;

Fig. 4 is a block diagram showing an arrangement of a network system according to a second embodiment of the present invention;

Fig. 5 is a flow chart for explaining an operation of the system shown in Fig. 4;

Fig. 6 is a block diagram partially showing an arrangement of a node of a network system according to a third embodiment of the present invention;

Fig. 7 is a block diagram partially showing an arrangement of a node of a network system according to a fourth embodiment of the present invention;

Fig. 8 is a block diagram partially showing an arrangement of a node of a network system according to a fifth embodiment of the present invention; and

Fig. 9 is a block diagram partially showing an arrangement of a node of a network system according to a sixth embodiment of the present invention.

An embodiment of the present invention will be described in detail below.

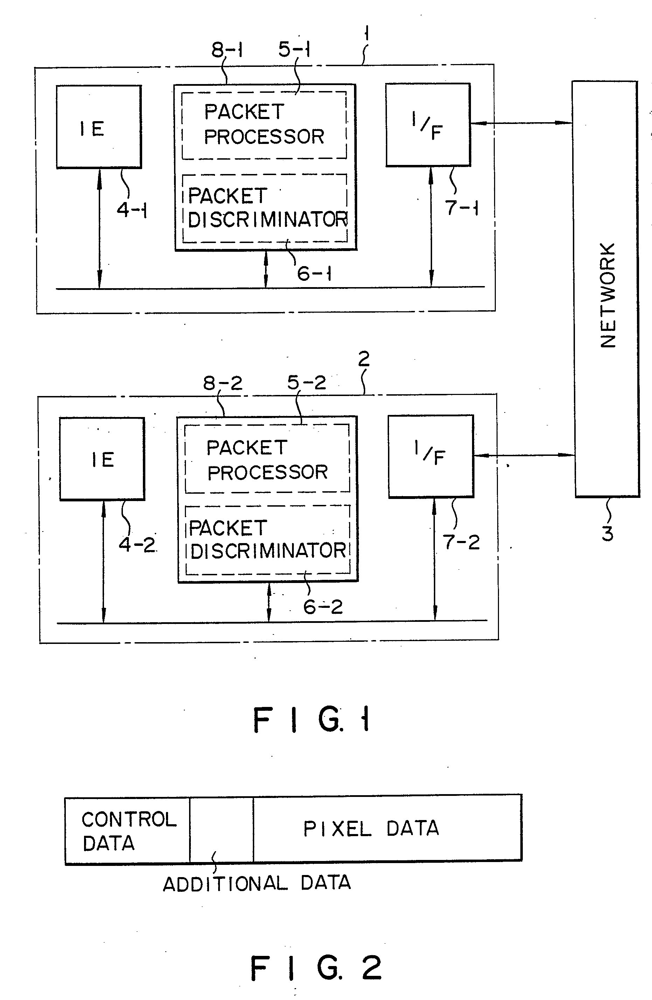

Fig. 1 shows an arrangement of a network system according to a first embodiment of the present invention.

The network system comprises a first node 1, a second node 2, and a network 3 to which the first and second nodes 1 and 2 are connected. The first node 1 has an image equipment (IE) 4-1, a central processing unit (CPU) 8-1, and an interface (I/F) 7-1. The IE 4-1 employs a medical imaging apparatus, such as an X-ray computed tomography (CT) system and a magnetic resonance imaging (MRI) system used for medical image diagnosis, a medical image memory apparatus storing image data obtained by the medical imaging apparatus to constitute a medical image data base, and an image display apparatus for displaying the image data. Data communication in this network system is mainly controlled by the CPU 8-1. Some functions executed by the CPU 8-1 are represented by a packet processor 5-1 and a packet discriminator 6-1.

Assume that one message is constituted by control data, additional data, and pixel data, as shown in Fig. 2. The packet processor 5-1 forms a command packet on the basis of the control data, and forms a data packet on the basis of the additional data and the pixel data. The control data includes data indicating a data length of additional data, e.g., a byte length. That is, the byte length of the additional data fetched after the control data can be detected from the control data, and the additional data and the pixel data can be identified on the basis of this data. More specifically, the data indicating the byte length of the additional data can serve as identification data for identifying the additional data and the pixel data.

The packets formed by the packet processor 5-1 are sent onto the network 3 through the I/F 7-1.

The packet discriminator 6-1 discriminates the packets fetched from the network 3 through the I/F 7-1. Data communication through the network 3 is performed in the order of the control data, additional data, and pixel data in a packet format. The packet discriminator 6-1 first receives the packet of the control data from the I/F 7-1. The packet discriminator 6-1 detects the length of the additional data using the byte length data as the identification data included in the control data, and performs discrimination of the data packets fetched thereafter with reference to the identification data. It should be noted that discrimination of the data packet means discrimination of additional data and pixel data on the packet level.

The arrangement of the first node 1 has been described. The second node 2 has the same arrangement as that of the first node 1. In Fig. 1, blocks having the same functions in the first and second nodes 1 and 2 are distinguished by suffixes (-1) and (-2).

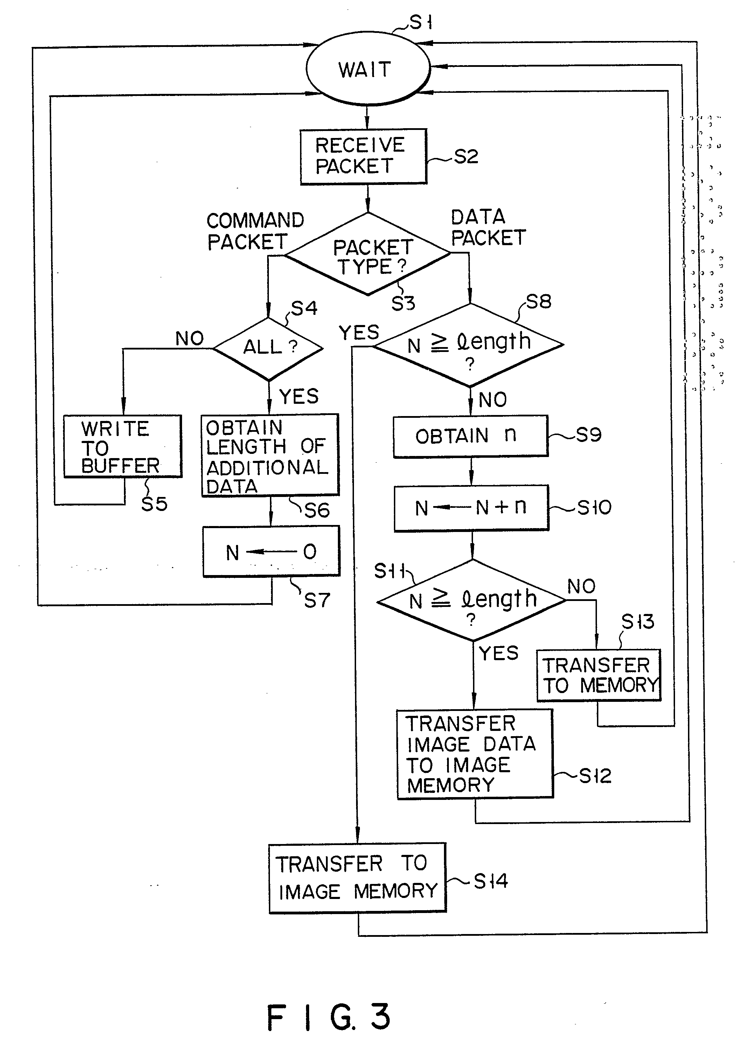

The operation of the system with the above arrangement will be described below with reference to the flow chart of Fig. 3.

In this system, the first and second nodes 1 and 2 have substantially the same arrangement, and have the data transmission/reception function. In the following description, a case will be described wherein image data is transferred from the first node 1 to the second node 2.

In the first node 1, the packet processor 5-1 causes control data to include data indicating the byte length of transfer additional data, and forms a command packet on the basis of this data. Furthermore, the packet processor 5-1 forms a data packet on the basis of additional data and pixel data.

The packets formed by the packet processor 5-1 are sequentially sent onto the network 3 through the I/F 7-1, and are fetched in the second node 2 through the I/F 7-2.

The second node 2 is set in a reception waiting state (S1) until an interruption to the I/F 7-2 is made. When the interruption to the I/F 7-2 is made, packet reception is started (S2).

When the packets are received, the packet discriminator 6-2 of the CPU 8-2 determines the types of packets (S3). The type determination is made to determine whether the corresponding packet is a command packet or a data packet. Since the packets are sent from the first node 1 in the order of a command packet and a data packet, the packet first fetched in the second node 2 is always a command packet. The packet discriminator 6-2 checks whether or not the last command packet is fetched (S4). This discrimination is performed by means of a flag attached to the last one of a plurality of command packets. The command packet is stored in a buffer in the I/F 7-2 (S5). After all the command packets are fetched (YES is obtained in step S4), the CPU 8-2 detects the byte length (to be referred to as a "length" hereinafter) of the additional data on the basis of the control data (S6). The CPU 802 then sets a variable N to be "0" (S7).

If it is determined in step S3 that the fetched packet is a data packet, the packet discriminator 6-2 of the CPU 8-2 checks if $N \geq$ length is established (S8). The variable N is kept unchanged after it is set to be "0" in step S7. If it is determined in step S8 that $N \geq$ length, this means that no additional data is present in data transferred from the first node 1. Since the corresponding data packet and following data packets (the last one of which has an end flag) are pixel data, they are transferred to an image memory in the IE 4-2 (S14). If it is determined in step S8 that $N \geq$ length is not established, this means that the corresponding data packet includes the additional data, the packet discriminator 6-2 of the CPU 8-2 checks a data length (represented by n) excluding a header of the data packet (S9), and adds n to the variable N to update the variable N (S10). Then, it is checked if $N \geq$ length is established (S11). If it is determined in step S11 that $N \geq$ length is not established, the corresponding data packet is not the pixel data but the additional data, and is transferred to an additional data memory in the IE 4-2 (S13). Every time a data packet is fetched, the variable N is updated in step S10. Thus, when it is determined in step S11 that $N \geq$ length is established, $(N-(\text{length}+n)+1)$th and subsequent data (these data are pixel data) are transferred to the image memory in the IE 4-2 (S12).

In this manner, the additional data and the pixel data are discriminated on the packet level. As a result, in this system, since all the messages transferred from the first node 1 need not be fetched in the buffer of the I/F 7-2 to perform message analysis, the scale of the buffer in the I/F 7-2 can be reduced, and an increase in overhead due to message analysis can be eliminated.

The above description has been made assuming that the first node 1 is a transmission node and the second node 2 is a reception node. However, image data transfer from the second node 2 to the first node 1 is performed in the same manner as described above.

In the above-mentioned system, both the first and second nodes 1 and 2 have the packet discriminator (6-1, 6-2) and the packet processor (5-1, 5-2). However, a transmission node need only comprise at least a packet processor, and a reception node need only comprise at least a packet discriminator. In the above system, the packet processor and the packet discriminator are realized by the CPU in a software manner. However, a circuit for realizing these processing functions may be provided in the I/F to realize these functions in a hardware manner.

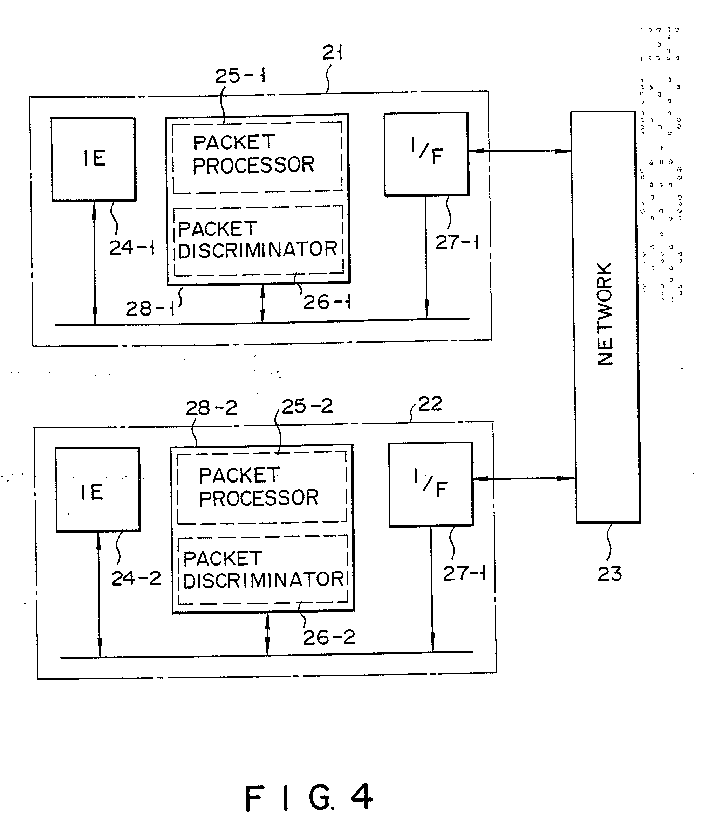

Fig. 4 shows an arrangement of a network system according to a second embodiment of the present invention.

The network system comprises a first node 21, a second node 22, and a network 23 to which the first and second nodes 21 and 22 are connected. The first node 21 comprises an IE 24-1, a CPU 28-1, and an I/F 27-1. Data communication in this network system is mainly controlled by the CPU 28-1. Some functions executed by the CPU 28-1 are represented by a packet processor 25-1 and a packet discriminator 26-1.

One message is constituted by control data, additional data, and pixel data. The packet processor 25-1 forms a command packet on the basis of the control data, an additional data packet on the basis of the additional data, and a pixel data packet on the basis of the pixel data. More specifically, different types of packets are formed in units of the control data, additional data, and pixel data.

The packets formed by the packet processor 25-1 are sent onto the network 23 through the I/F 27-1.

The packet discriminator 26-1 discriminates the packets by determining the types of the packets fetched from the network 23 through the I/F 27-1. Since the types of the packets are different from each other, as described above, the packet discriminator 26-1 can easily discriminate the packets.

The arrangement of the first node 21 has been described. The second node 22 has the same arrangement as that of the first node 1. In Fig. 4, blocks having the same functions in the first and second nodes 21 and 22 are distinguished by suffixes (-1) and (-2).

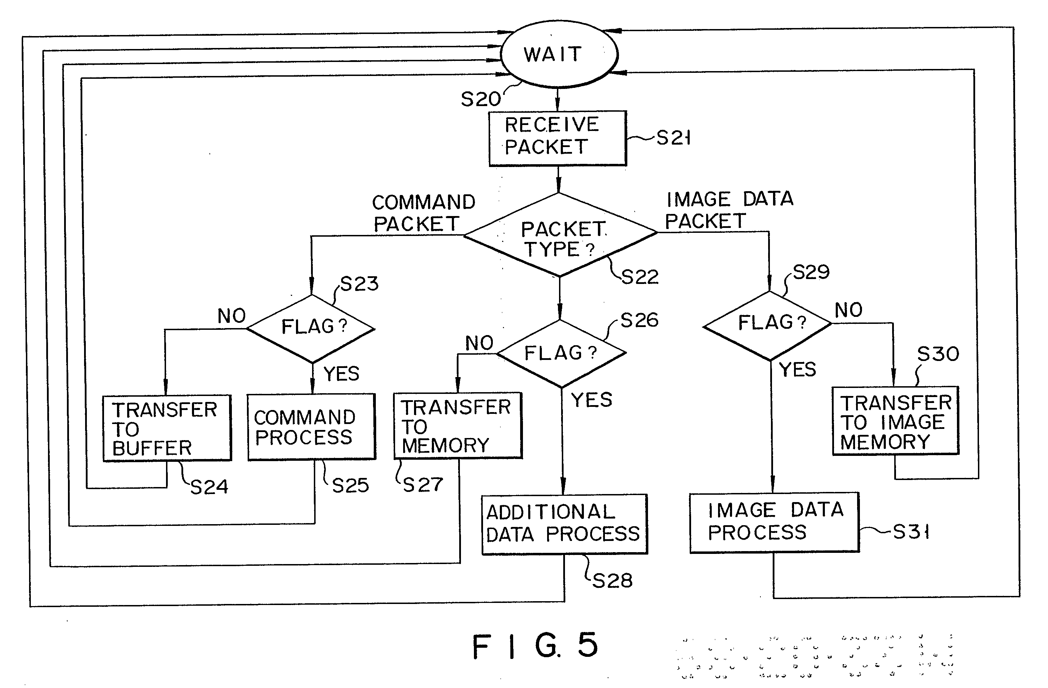

The operation of the system with the above arrangement will be described below with reference to the flow chart of Fig. 5.

In this system, the first and second nodes 21 and 22 have substantially the same arrangement, and have the data transmission/reception function. In the following description, a case will be described wherein image data is transferred from the first node 21 to second node 22.

In the first node 21, the packet processor 25-1 forms different types of packets in units of the control data, additional data, and pixel data. The packet processor 25-1 adds a flag indicating the last packet to last ones of the control data packets, additional data packets, and pixel data packets.

The packets formed by the packet processor 25-1 are sequentially sent onto the network 23 through the I/F 27-1, and are fetched in the second node 22 through the I/F 27-2.

The second node 22 is set in a reception waiting state (S20) until an interruption to the I/F 27-2 is made. When the interruption to the I/F 27-2 is made, packet reception is started (S21).

When the packets are received, the packet discriminator 26-2 of the CPU 28-2 determines the types of packets (S22). If it is determined in step S22 that the corresponding packet is a command packet of the control data, it is checked if the packet includes an end flag (S23). The command packets are sequentially stored in a buffer (S24), and after the packet added with an end flag (i.e., the last command packet) is fetched, command processing is executed (S25).

If it is determined in step S22 that the corresponding packet is an additional data packet, it is checked if the packet includes an end flag (S26). The additional data packets are sequentially stored in an additional data memory (S27), and after an additional data packet added with an end flag is fetched, additional data processing is executed (S28).

Furthermore, if it is determined in step S22 that the corresponding packet is a pixel data packet, it is checked if the packet includes an end flag (S29). The pixel data packets are sequentially stored in an image memory (S30), and after a pixel data packet added with an end flag is fetched, pixel data processing is executed (S31).

In this system, as described above, the packet processor 25-1 forms packets in units of control data, additional data, and pixel data, and packet discrimination is performed by the packet discriminator 26-2 by determining the packet types, and no message analysis is performed after all the messages are fetched in a buffer of the I/F 27-2. Therefore, the scale of the buffer in the I/F 27-2 can be reduced, and an increase in overhead due to message analysis can be eliminated.

The above description has been made assuming that the first node 21 is a transmission node and the second node 22 is a reception node. However, image data transfer from the second node 22 to the first node 21 is performed in the same manner as described above.

In the above-mentioned system, both the first and second nodes 21 and 22 have the packet discriminator (26-1, 26-2) and the packet processor (25-1, 25-2). However, a transmission node need only comprise at least a packet processor, and a reception node need only comprise at least a packet discriminator. In the above system, the packet processor and the packet discriminator are realized by the CPU in a software manner. However, a circuit for realizing these processing functions may be provided in the I/F to realize these functions in a hardware manner.

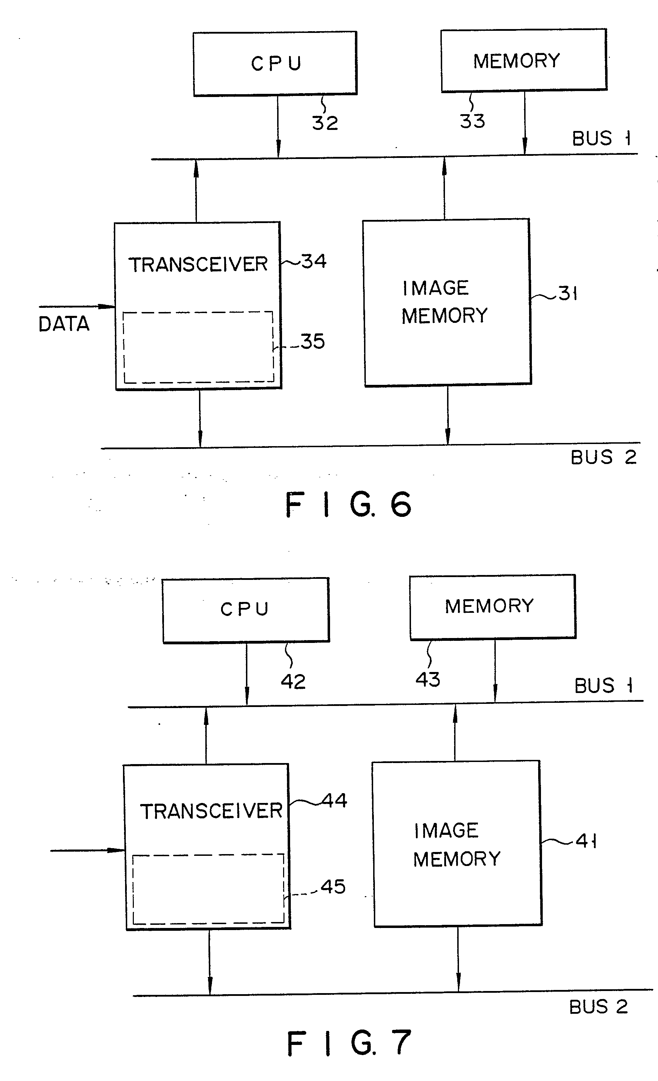

Fig. 6 shows an arrangement of a main part of a node of a network system according to a third embodiment of the present invention.

The node comprises an image memory 31 of an IE, a CPU 32, a memory 33 of the CPU 32, and a transceiver 34 including a function of an I/F. The transceiver 34 comprises a buffer 35. The image memory 31, the CPU 32, the memory 33, and the transceiver 34 are connected through a bus 1, and the image memory 31 and the transceiver 34 are connected through a bus 2. Data communication at this node is mainly controlled by the CPU 32.

One message is constituted by control data, additional data, and pixel data. In a transmission node, as in the system shown in Fig. 1, for example, the CPU (32) forms a command packet on the basis of the control data, and forms a data packet on the basis of the additional data and the pixel data. The command packet of the control data includes data indicating a data length, e.g., a byte length, of the additional data. The data indicating the byte length of the additional data can serve as identification data for identifying the additional data and the pixel data.

The packets formed in this manner are sent onto a network through the transceiver (34) at the transmission side.

Data communication through the network is performed in the order of the control data, additional data, and pixel data in a packet format. The transceiver 34 of the reception node first receives a command packet of the control data.

When the transceiver 34 receives the command packet, it interrupts the CPU 32.

(Step S30) The CPU 32 analyzes the control data fetched in the buffer 35 of the transceiver 34, obtains a length of the additional data on the basis of the byte length data as the identification data, and stores it in an internal register of the CPU 32.

(Step S31) If the packet received first does not include the identification data, processing in step S30 is repeated for the next command packet.

(Step S32) When a data packet is received after the command packet, the CPU 32 compares M = (the number of bytes of a packet - the number of bytes of a header portion) with a value $M'$ stored in the register.

(Step S33) If it is determined in step S32 that $M < M'$, the CPU DMA (directly memory access)-transfers the packet to the memory 33 through the bus 1, and substitutes $(M-M')$ in the register. Subsequently, the data packets are received, and step S32 is repeated.

(Step S34) If it is determined in step S32 that $M \geq M'$, $M'$-byte data from the beginning (excluding the header) of the packet is DMA-transferred to the memory 33 through the bus 1, and the remaining $(M-M')$-byte data is DMA-transferred to the image memory 31 through the bus 2.

(Step S35) Data packets received after step S34 are DMA-transferred to the image memory 31 through the bus 2.

Note that in the above system, the control data fetched in the buffer 35 of the transceiver 34 is analyzed in step S30. However, after the content of the buffer 35 of the transceiver 34 is DMA-transferred to the memory 33, the control data in the memory 33 may be analyzed.

Fig. 7 shows an arrangement of a main part of a node of a network system according to a fourth embodiment of the present invention.

The node comprises an image memory 41 of an IE, a CPU 42, a memory 43 of the CPU 42, and a transceiver 44 including a function of an I/F. The transceiver 44 comprises a buffer 45. The image memory 41, the CPU 42, the memory 43, and the transceiver 44 are connected through a bus 1, and the image memory 41 and the transceiver 44 are connected through a bus 2. Data communication at this node is mainly controlled by the CPU 42.

One message is constituted by control data, additional data, and pixel data. In a transmission node, as in the system shown in Fig. 4, for example, the CPU (42) forms a command packet on the basis of the control data, an additional data packet on the basis of the additional data, and a pixel data packet on the basis of the pixel data. More specifically, different types of packets are formed in units of the control data, additional data, and pixel data, and packet type data is included in a header of each packet.

The packets formed in this manner are sent onto a network through the transceiver (44) at the transmission side.

Data communication through the network is performed in the order of the command packet of the control data, the additional data packet, and the pixel data packet in a packet format. The transceiver 44 in the reception node first receives the command packet.

When the transceiver 44 receives the command packet, it interrupts the CPU 42.

(Step S40) The CPU 42 analyzes the data fetched in the buffer 45 to determine the packet type.

(Step S41) If it is determined that the packet type indicates a command packet or an additional data packet, the corresponding packet is DMA-transferred to the memory 43 through the bus 1.

(Step S42) If it is determined that the packet type indicates a pixel data packet, the corresponding packet is DMA-transferred to the image memory 41 through the bus 2.

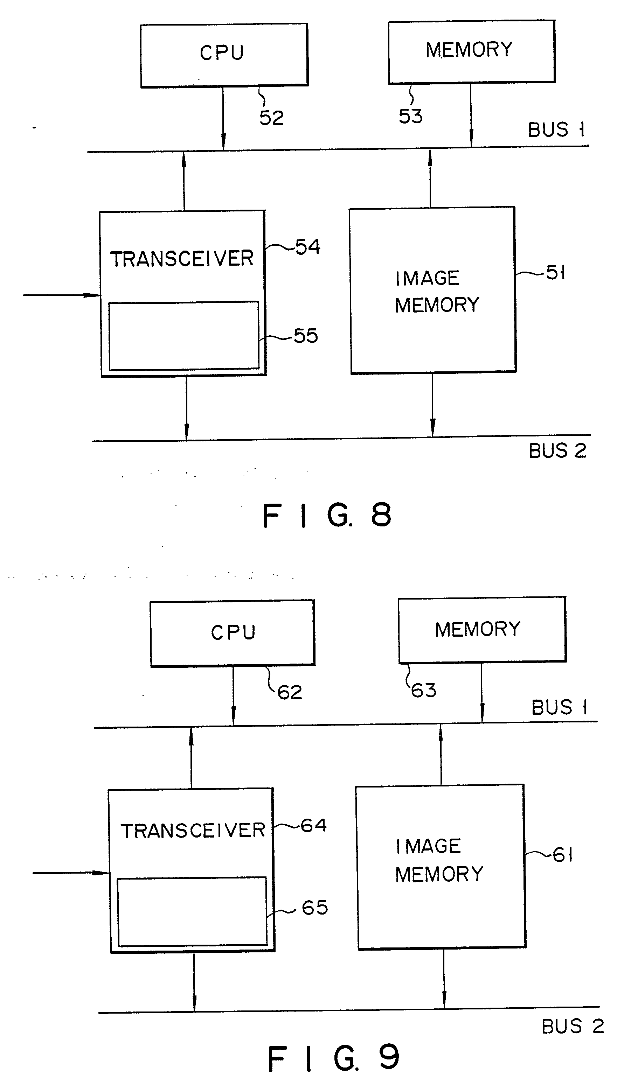

Fig. 8 shows an arrangement of a main part of a node of a network system according to a fifth embodiment of the present invention.

The node comprises an image memory 51 of an IE, a CPU 52, a memory 53 of the CPU 52, and a transceiver 54 including a function of an I/F. The transceiver 54 comprises a packet type identification circuit 55. The image memory 51, the CPU 52, the memory 53, and the transceiver 54 are connected through a bus 1, and the image memory 51 and the transceiver 54 are connected through a bus 2.

The packet type identification circuit 55 performs identification of the packet types corresponding to processing in step S40 in the system shown in Fig. 7 by hardware processing. The transceiver 54 may comprise a buffer, as needed. The CPU 52 need only execute processing corresponding to steps S41 and S42 in the system shown in Fig. 7 in accordance with the identification result of the packet type identification circuit 55.

In this system, the load on the CPU can be reduced as compared to the system shown in Fig. 7, and higher-speed processing can be assured.

Fig. 9 shows an arrangement of a main part of a node of a network system according to a sixth embodiment of the present invention.

The node comprises an image memory 61 of an IE, a CPU 62, a memory 63 of the CPU 62, and a transceiver 64 including a function of an I/F. The transceiver 64 comprises a data identification circuit 65. The image memory 61, the CPU 62, the memory 63, and the transceiver 64 are connected through a bus 1, and the image memory 61 and the transceiver 64 are connected through a bus 2.

The data identification circuit 65 performs data identification included in processing corresponding to steps S30 to S34 in the system shown in Fig. 6 by hardware processing. The transceiver 64 may comprise a buffer, as needed. The CPU 62 need only execute processing corresponding to steps S33 to S35 in the system shown in Fig. 6 in accordance with the identification result of the data identification circuit 65.

In this system, the load on the CPU can be reduced as compared to the system shown in Fig. 6, and higher-speed processing can be assured.

## Claims

1. A network system which has a plurality of nodes (1, 2, 21, 22), forms packets on the basis of control data associated with image data transfer, image additional data, and pixel data, and performs data communication from a transmission node (1, 2, 21, 22) to a reception node (2, 1, 22, 21) in a packet format, characterized by comprising:

packet forming means (5-1, 5-2, 25-1, 25-2, 32, 42, 52, 62), arranged in said transmission node (1, 2, 21, 22), for forming said packets and adding identification data for identifying said image additional data and said pixel data to said packets; and
data discriminating means (6-1, 6-2, 26-1, 26-2, 32, 42, 55, 65), arranged in said reception node (2, 1, 22, 21), for discriminating said image additional data and said pixel data on the basis of said identification data.

2. A network system which has a plurality of nodes (1, 2), forms at least one command packet on the basis of control data associated with image data transfer, forms at least one data packet on the basis of image additional data and pixel data, and performs data communication from a transmission node (1, 2) to a reception node (2, 1) in a packet format, characterized by comprising:
packet forming means (5-1, 5-2, 32, 62), arranged in said transmission node (1, 2), for forming said packets and adding identification data for identifying said image additional data and said pixel data to said control data forming the command packet; and
data discriminating means (6-1, 6-2, 32, 65), arranged in said reception node (2, 1), for discriminating said image additional data and said pixel data on the basis of said identification data.

3. A system according to claim 2, characterized in that said identification data is data indicating a byte length of said image additional data, and said packet discriminating means (6-1, 6-2, 32, 65) discriminates the data packet with reference to said byte length.

4. A system according to claim 2, characterized in that said data discriminating means (6-1, 6-2, 32, 65) includes analyzing means for analyzing received command packet to detect a data length information of said image additional data based on said identification data, separating means for separating said additional data and said pixel data based on said data length information.

5. A system according to claim 4, characterized in that said analyzing means and separating means are incorporated in a hardware circuit (65).

6. A network system, having a plurality of nodes (21, 22), for performing data communication from a transmission node (21, 22) to a reception node (22, 21) in a packet format, characterized by comprising:
packet forming means (25-1, 25-2, 42, 52), arranged in said transmission node (21, 22), for forming at least one command packet of the basis of control data associated with image transfer, at least one additional data packet on the basis of image additional data, and at least one packet on the basis of pixel data; and
data discriminating means (26-1, 26-2, 42, 55), arranged in said reception node (22, 21), for discriminating the packets by determining types of received packets.

7. A system according to claim 6, characterized in that said data discriminating means (26-1, 26-2, 42, 55) includes detecting means for detecting the types of received packets, transferring means for individually transferring the packets according to the packet type.

8. A system according to claim 7, characterized in that said analyzing means and separating means are incorporated in a hardware circuit (55).

F I G. 1

| CONTROL DATA | | PIXEL DATA |
|---|---|---|

ADDITIONAL DATA

F I G. 2

F I G. 3

F I G. 4

FIG. 5

EP 0 334 318 A2

F I G. 6

F I G. 7

F I G. 8

F I G. 9